(19) Europäisches Patentamt / European Patent Office / Office européen des brevets

(11) **EP 4 084 266 B1**

(12) **EUROPEAN PATENT SPECIFICATION**

(45) Date of publication and mention
of the grant of the patent:
**27.09.2023   Bulletin 2023/39**

(21) Application number: **21205607.1**

(22) Date of filing: **29.10.2021**

(51) International Patent Classification (IPC):
**H02J 7/00** (2006.01)

(52) Cooperative Patent Classification (CPC):
**H02J 7/00304; H02J 7/0069;** Y02T 10/70;
Y02T 10/7072; Y02T 90/14

(54) **METHOD AND APPARATUS FOR DETERMINING FAST CHARGING CURRENT LIMIT OF BATTERY CELL, ELECTRONIC DEVICE, AND MEDIUM**

VERFAHREN UND VORRICHTUNG ZUR BESTIMMUNG DER SCHNELLLADESTROMGRENZE EINER BATTERIEZELLE, ELEKTRONISCHE VORRICHTUNG UND MEDIUM

PROCÉDÉ ET APPAREIL DE DÉTERMINATION DE LIMITE DE COURANT DE CHARGE RAPIDE DE CELLULE DE BATTERIE, DISPOSITIF ÉLECTRONIQUE ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2021   CN 202110462564**

(43) Date of publication of application:
**02.11.2022   Bulletin 2022/44**

(73) Proprietor: **Guangzhou Xiaopeng Motors Technology Co., Ltd.
Guangzhou, Guangdong 510000 (CN)**

(72) Inventors:
• **NING, Feng**
  **GUANGZHOU, 510000 (CN)**
• **XU, Gang**
  **GUANGZHOU, 510000 (CN)**
• **YE, Bangbin**
  **GUANGZHOU, 510000 (CN)**
• **LIU, Anlong**
  **GUANGZHOU, 510000 (CN)**
• **LIU, Minghui**
  **GUANGZHOU, 510000 (CN)**
• **XIA, Heng**
  **GUANGZHOU, 510000 (CN)**

(74) Representative: **Maucher Jenkins
Patent- und Rechtsanwälte
Seventh Floor Offices
Artillery House
11-19 Artillery Row
London SW1P 1RT (GB)**

(56) References cited:
**CN-A- 111 525 651        US-A1- 2019 202 299
US-A1- 2020 335 993**

• **HU XIAOSONG ET AL: "Optimal Multistage Charging of NCA/Graphite Lithium-Ion Batteries Based on Electrothermal-Aging Dynamics", IEEE TRANSACTIONS ON TRANSPORTATION ELECTRIFICATION, IEEE, vol. 6, no. 2, 27 February 2020 (2020-02-27), pages 427-438, XP011794653, DOI: 10.1109/TTE.2020.2977092 [retrieved on 2020-06-18]**

## Description

### FIELD

The present disclosure relates to the technical field of battery cells, and more particularly, to a method for determining a fast charging current limit of a battery cell, an apparatus for determining a fast charging current limit of a battery cell, an electronic device, and a computer-readable storage medium.

### BACKGROUND

The demand for lithium batteries as a dominant energy source has been increasing with the development of new energy vehicles, and the charging speed of a lithium battery has become an issue of concern. Typically, in order to increase the charging speed of a lithium battery, a battery cell supplier may work on a better raw material and designs of the battery cell to develop a lithium-ion battery cell product with higher charging power. However, a tolerable charging rate of the battery cell may vary in different charging states and at different operation temperatures, and if it goes beyond the charging capacity of the battery cell, there will be a risk of lithium precipitation.

In the prior art, a degree reduction constant current charging strategy is typically adopted for fast charging, i.e., the charging rate directly jumps from a charging stage to an adjacent one; or a degree reduction constant current and constant voltage charging strategy is adopted, i.e., for two adjacent charging stages, the charging rate jumps from the previous one to the next one at a constant voltage with reduced current, and then the charging is performed with a constant current. However, the methods of implementing these two fast charging strategies are based on "trials and errors", which is limited by the parameters such as the experience of the solution implementer and the test resources, without considering the characteristic of potential rebound of the battery cell, thereby failing to fully exploit the fast charging capacity of the battery cell. US 2019/0202299 A1 provides a battery charging method includes acquiring a functional relationship of a differential value of an amount of charge or a state of charge (SOC) with respect to a voltage of a battery. US 2020/0335993 A1 teaches a battery charging method and apparatus for fast charging and providing a long life of the battery. Hu Xiaosong et. al. provides a solution for optimal multistage charging of batteries. In CN 111 525 651 A, a charging method is known for solving the problem of relatively low battery utilization rate during charging.

### SUMMARY

In view of the above problems, embodiments of the present disclosure are set forth to provide a method for determining a fast charging current limit of a battery cell and a corresponding apparatus for determining a fast charging current limit of a battery cell that solve or at least partially solve the above problems.

To solve the above problems, the embodiments of the present disclosure provide a method for determining a fast charging current limit of a battery cell, including: dividing a process of charging the battery cell into n charging stages based on electric quantity; determining a rebound potential value and a polarization potential value of each charging stage and a difference value between allowable lowest negative electrode potentials of adjacent charging stages in an order from larger to smaller values of n; calculating one or more charging current values of each charging stage based on the rebound potential value and the polarization potential value of the charging stage and the difference value between the allowable lowest negative electrode potentials of adjacent charging stages; and determining target fast charging current limits corresponding to different charging stages that satisfy a preset condition based on the one or more charging current values of each of the n charging stages.

Alternatively, said determining a rebound potential value and a polarization potential value of each charging stage and a difference value between allowable lowest negative electrode potentials of adjacent charging stages in an order from larger to smaller values of n includes: determining a first charging current parameter, a first allowable lowest negative electrode potential parameter and a first impedance parameter of a certain charging stage from an n-th charging stage to a 2-nd charging stage, respectively, and determining a second impedance parameter, a negative electrode equilibrium potential parameter, a polarization potential algebraic formula and a current reduction algebraic formula of an adjacent charging stage prior to the certain charging stage; determining the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage; determining a polar potential value of the certain charging stage based on the first charging current parameter and the first impedance parameter of the certain charging stage one by one; and determining the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

Alternatively, said calculating one or more charging current values of each charging stage based on the rebound potential value and the polarization potential value of each charging stage and the difference value between the allowable lowest negative electrode potentials of adjacent charging stages includes: calculating the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

Alternatively, said determining, based on the one or more charging current values of each of the n charging stages, target fast charging current limits corresponding to different charging stages that satisfy a preset condition includes: sequentially extracting one candidate charging current value from the one or more charging current values of each charging stage; grouping the candidate charging current values of the n charging stages based on the electric quantity to obtain a plurality of candidate charging current combinations; calculating a sum of reciprocals of n candidate charging current values of each candidate charging current combination; determining a target charging current combination with a smallest sum from the plurality of candidate charging current combinations; and determining a target charging current value of each charging stage in the target charging current combination as the target fast charging current limit of each charging stage, respectively.

Alternatively, said dividing a process of charging the battery cell into n charging stages based on electric quantity includes: charging the battery cell until a state of charge (SOC) of the battery cell reaches a saturated state; dividing, based on SOC, the process of charging the battery cell into the n charging stages in a manner of equal electric quantity.

Alternatively, the first impedance parameter includes a first ohmic impedance parameter, a first electrochemical impedance parameter, and a first diffusion impedance parameter; and the second impedance parameter includes a second ohmic impedance parameter, a second electrochemical impedance parameter, and a second diffusion impedance parameter.

Alternatively, the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

The embodiments of the present disclosure also provide an apparatus for determining a fast charging current limit of the battery cell, including: a dividing module configured to divide a process of charging the battery cell into n charging stages based on electric quantity; a first determining module configured to determine a rebound potential value and a polarization potential value of each charging stage and a difference value between allowable lowest negative electrode potentials of adjacent charging stages in an order from larger to smaller values of n; a calculating module configured to calculate one or more charging current values of each charging stage based on the rebound potential value and the polarization potential value of the charging stage and the difference value between the allowable lowest negative electrode potentials of adjacent charging stages; and a second determining module configured to determine, based on one or more charging current values of each of the n charging stages, targeted fast charging current limits corresponding to different charging stages that satisfy a preset condition.

Alternatively, the first determining module includes: a parameter determining submodule configured to determine a first charging current parameter, a first allowable lowest negative electrode potential parameter and a first impedance parameter of a certain charging stage from an n-th charging stage to a 2-nd charging stage, respectively, and determine a second impedance parameter, a negative electrode equilibrium potential parameter, a polarization potential algebraic formula and a current reduction algebraic formula of an adjacent charging stage prior to the certain charging stage; a rebound potential value determining submodule configured to determine the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage; a polar potential value determining submodule configured to determine a polar potential value of the certain charging stage based on the first charging current parameter and the first impedance parameter of the certain charging stage one by one; and a submodule for determining the difference value between the allowable lowest negative electrode potentials of adjacent charging stages, which is configured to determine the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

Alternatively, the calculating module includes: a charging current value calculating submodule configured to calculate the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

Alternatively, the second determining module includes: an extracting submodule configured to sequentially extract one candidate charging current value from the one or more charging current values of each charging stage; a grouping submodule configured to group the candidate charging current values of the n charging stages based on the electric quantity to obtain a plurality of candidate charging current combinations; a calculating submodule configured to calculate a sum of reciprocals of n candidate charging current values of each candidate charging current combination; a target charging current combination determining submodule configured to determine a target charging current combination with a smallest sum from the plurality of candidate charging current combinations; and a target fast charging current limit determining submodule configured to determine a target charging current value of each charging stage in the target charging current combination as the target fast charging current limit of each charging stage, respectively.

Alternatively, the dividing module includes: a charging submodule configured to charge the battery cell until a state of charge (SOC) of the battery cell reaches a saturated state; and a dividing submodule configured to divide, based on SOC, the process of charging the battery cell into the n charging stages in a manner of equal electric quantity.

Alternatively, the first impedance parameter includes a first ohmic impedance parameter, a first electrochemical impedance parameter, and a first diffusion impedance parameter; and the second impedance parameter includes a second ohmic impedance parameter, a second electrochemical impedance parameter, and a second diffusion impedance parameter.

Alternatively, the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

The embodiments of the present disclosure further provide an electronic device, including a processor, a memory, and a computer program stored on the memory and executable on the processor. The computer program, when executed by the processor, implements the steps of the method for determining a fast charging current limit of a battery cell as described above.

The embodiments of the present disclosure further provide a computer-readable storage medium having a computer program stored thereon. The computer program, when executed by a processor, performs the steps of the method for determining a fast charging current limit of a battery cell as described above.

The embodiments of the present disclosure have the following advantages over the prior art.

In the embodiments of the present disclosure, firstly, a process of charging the battery cell is divided into the n charging stages based on the electric quantity; secondly, the rebound potential value and the polarization potential value of each charging stage as well as the difference value between the allowable lowest negative electrode potentials of adjacent charging stages are determined in the order from larger to smaller values of n; thirdly, one or more charging current values of each charging stage are calculated based on the rebound potential value and the polarization potential value of the charging stage and the difference value between the allowable lowest negative electrode potentials of adjacent charging stages; and finally, the target fast charging current limits corresponding to different charging stages that satisfy a preset condition are determined based on the one or more charging current values of each charging stage of the n charging stages. According to the embodiments of the present disclosure, the characteristic of the rebound potential of the battery cell can be fully exploited to calculate the fast charging capacity limit of the battery cell, which greatly saves samples and test resources and has the advantages of high efficiency, accuracy, and cost-effectiveness.

## BRIEF DESCRIPTION OF DRAWINGS

In order to clearly explain the technical solutions of the embodiments of the present disclosure, the drawings required for the description of the embodiments are briefly described below. It is obvious that the drawings as described below are only some embodiments of the present disclosure, and those skilled in the art can obtain other drawings from these drawings without paying any inventive effort.

FIG. 1 is a flowchart illustrating steps of a method for determining a fast charge current limit of a battery cell according to an embodiment of the present disclosure;

FIG. 2 is a flowchart of steps of determining target fast charging current limits that satisfy a preset condition of the n charging stages according to the present disclosure;

FIG. 3 is a graph showing a relationship between a fast charging current limit and a negative electrode potential according to the present disclosure and the prior art; and

FIG. 4 is a structural block diagram of an apparatus for determining a fast charging current limit of a battery cell according to an embodiment of the present disclosure.

## DESCRIPTION OF EMBODIMENTS

The embodiments of the present disclosure will now be clearly and thoroughly described hereinafter with reference to the accompanying drawings. Obviously, the embodiments described herein are some but not all of the possible embodiments. All other embodiments obtained by those skilled in the art based on the embodiments of the present disclosure without paying any inventive effort shall fall within the scope of the present disclosure.

In recent years, because policies have been implemented for environmental protection, energy conservation and emission reduction, new energy vehicles have ushered in an unprecedented era of development, and gradually taken up a bigger share in the automobile market. Endurance, charging and safety are the top three issues that the consumers concern most, and they depend largely on the power source of electric vehicles, namely, batteries. Current new energy vehicles commonly adopt lithium-ion batteries. The battery is the power source of a new energy vehicle, and a battery cell is the core of the battery and plays the most important role in any type of battery. The battery cell functions as the heart of the battery and determines the quality of a rechargeable battery directly. Typically, to increase the charging speed of a lithium battery, a battery cell supplier may work on a better raw material and designs of the battery cell to develop a lithium-ion battery cell product with higher charging power. However, a tolerable charging rate of the battery cell may vary in different charging states and at different operation temperatures, and if it goes beyond the charging capacity of the battery cell, there will be a risk of lithium precipitation.

To reduce the risk of lithium precipitation at the negative electrode interface, it is necessary to control the negative electrode potential to be not lower than 0V when the charging ends. In this case, there are two fast charging methods known in the prior art to improve the speed of charging the battery cell. One of the methods adopts a degree reduction constant current charging strategy, where the charging rate directly jumps from a charging stage to an adjacent one, i.e., there is no transition between the two charging stages. The other one fast charging method adopts a degree reduction constant current and constant voltage charging strategy, where the charging rate jumps from one of two adjacent stages to the next one of the two adjacent stages at a constant voltage with reduced current, and then the charging is performed with a constant current, that is, in every two adjacent charging stages, between an end node of a former charging stage and a beginning stage of a later charging stage, the charging voltage keeps unchanged and the charging current gradually decreases, and thus there is a transitional stage.

The above two fast charging methods are all based on "trials and errors", intended to build different fast charging strategy comparison groups empirically to conduct experiments and select the optimal strategy. However, they are limited by the experience of the solution implementer and the test resources, without considering the characteristic of potential rebound of the battery cell, thereby failing to fully exploit the fast charging capacity of the battery cell.

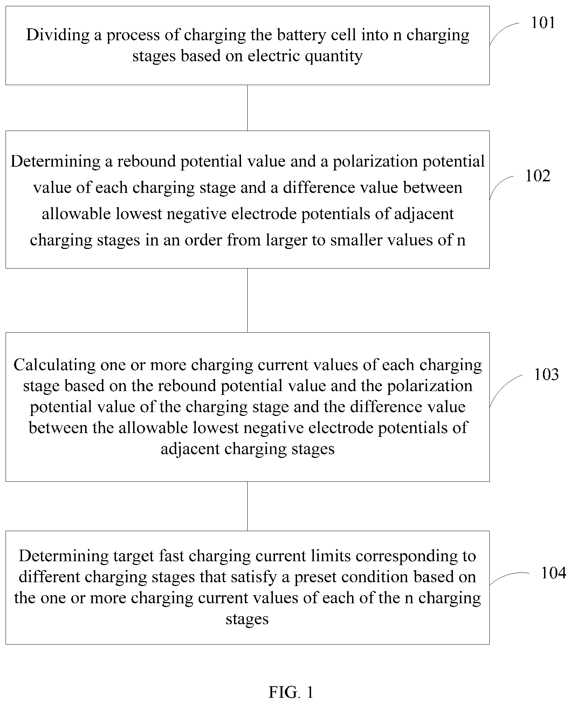

FIG. 1 is a flowchart illustrating steps of a method for determining a fast charge current limit of a battery cell according to an embodiment of the present disclosure. Referring to FIG. 1, the method specifically includes steps S101 to S104.

In step 101, a process of charging the battery cell is divided into n charging stages based on electric quantity.

The potential rebound is caused by a current drop from the former charging stage to the later charging stage, and thus the potential rebound is inevitable in the process of charging the battery cell. According to the embodiment of the present disclosure, provided that the negative electrode potential is ensured not to be lower than 0V when the charging ends, the characteristic of potential rebound of the battery cell is fully considered. Therefore, the process of charging the battery cell can be divided into the n charging stages based on the electric quantity, and the rebound potential of each charging stage in the n charging stages can be calculated.

In an alternative embodiment of the present disclosure, step 101 may include the following sub-steps of: charging the battery cell until a state of charge (SOC) of the battery cell reaches a saturated state; and dividing, based on SOC, the process of charging the battery cell into the n charging stages in a manner of equal electric quantity.

The SOC (State of Charge) reflects the remaining capacity of the battery and is defined numerically as a ratio of remaining capacity to battery capacity, usually expressed as a percentage. The value of SOC ranges from 0 to 1, when SOC = 0, it indicates that the battery is completely discharged, and when SOC = 1, it indicates that the battery is completely charged.

According to the embodiment of the present disclosure, during charging the battery cell, the SOC of the cell then is changed from an unsaturated state to a saturated state, and when SOC of the cell reaches the saturated state, i.e., SOC = 1, the process of charging the cell can be equally divided into the n charging stages according to the electric quantity based on SOC, where $n \geq 10$. For example, when the battery cell is charged and the SOC of the cell is changed from 0% to 100%, the process of charging from 0% to 100% can be equally divided into 10 charging stages based on the SOC, and in accordance with the charging electric quantity of the cell, the SOCs of the 10 charging stages are sequentially 0% to 10%, 10% to 20%, 20% to 30%, 30% to 40%, 40% to 50%, 50% to 60%, 60% to 70%, 70% to 80%, 80% to 90%, and 90% to 100%. The foregoing example is provided only to enable those skilled in the art to better understand the embodiments of the present disclosure, but not intended to limit the present disclosure.

In step 102, a rebound potential value and a polarization potential value of each charging stage and a difference value between allowable lowest negative electrode potentials of adjacent charging stages are determined in an order from larger to smaller values of n.

According to the embodiment of the present disclosure, after the battery cell is fully charged, the SOC of the battery cell then is the saturated state, namely SOC = 1, the rebound potential value and the polarization potential value of each charging stage as well as the difference value between the allowable lowest negative electrode potentials of the adjacent charging stages can thus be calculated one by one in the order from larger to smaller values of n.

In an alternative embodiment of the present disclosure, step 102 may include the following sub-steps of: determining a first charging current parameter, a first allowable lowest negative electrode potential parameter and a first impedance parameter of a certain charging stage from an n-th charging stage to a 2-nd charging stage, respectively, and determining a second impedance parameter, a negative electrode equilibrium potential parameter, a polarization potential algebraic formula and a current reduction algebraic formula of an adjacent charging stage prior to the certain charging stage; determining the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage; determining a polar potential value of the certain charging stage based on the first charging current parameter and the first impedance parameter of the certain charging stage one by one; and determining the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

In an alternative embodiment of the present disclosure, the first impedance parameter includes a first ohmic impedance parameter, a first electrochemical impedance parameter, and a first diffusion impedance parameter; and the second impedance parameter includes a second ohmic impedance parameter, a second electrochemical impedance parameter, and a second diffusion impedance parameter.

In an alternative embodiment of the present disclosure, the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

Specifically, the equation for the rebound potential is:

$$V_{rebound\_n} = (I_{n-1} - I_n) \cdot \left(R_{ohm\_n} + R_{electrochem\_n} + R_{diffusion\_n}\right) \text{ (Equation 1)}$$

where $V_{rebound\_n}$ is the rebound potential between the (n-1)-th charging stage and the n-th charging stage, $I_{n-1}$ is the charging current of the (n-1)-th charging stage, $I_n$ is the charging current of the n-th charging stage, $R_{ohm\_n}$ is the ohmic resistance of the n-th charging stage, $R_{electrochem\_n}$ is the electrochemical resistance of the n-th charging stage, and $R_{diffusion\_n}$ is the diffusion resistance of the n-th charging stage.

Specifically, the equation for the polarization potential is:

$$V_{polarization\_n} = I_n \cdot \left(R_{ohm\_n} + R_{electrochem\_n} + R_{diffusion\_n}\right) \text{ (Equation 2)}$$

where $V_{polarization\_n}$ is the polarization potential of the n-th charging stage, $I_n$ is the charging current of the n-th charging stage, $R_{ohm\_n}$ is the ohmic resistance of the n-th charging stage, $R_{electrochem\_n}$ is the electrochemical resistance of the n-th charging stage, and $R_{diffusion\_n}$ is the diffusion resistance of the n-th charging stage.

Specifically, the equation of the allowable lowest negative electrode potential of the (n-1)-th charging stage is:

$$V_{allowable\ lowest\ negative\ electrode\_n-1} = V_{negative\ electrode\ equilibrium\_n-1} - I_{n-1} \cdot$$

$$\left(R_{ohm\_n-1} + R_{electrochem\_n-1} + R_{diffusion\_n-1}\right) \text{ (Equation 3)}$$

where $V_{allowable\ lowest\ negative\ electrode\_n-1}$ is the lowest allowable negative electrode potential of the (n-1)-th charging stage, $V_{negative\ electrode\ equilibrium\_n-1}$ is the negative electrode equilibrium potential of the (n-1)-th charging stage, $I_{n-1}$ is the charging current of the (n-1)-th charging stage, $R_{ohm\_n-1}$ is the ohmic resistance of the (n-1)-th charging stage, $R_{electrochem\_n-1}$ is the electrochemical resistance of the (n-1)-th charging stage, and $R_{diffusion\_n-1}$ is the diffusion resistance of the (n-1)-th charging stage.

Specifically, the relationship of the rebound potential, the polarization potential and the allowable lowest negative electrode potential of the n-th charging stage and the allowable lowest negative electrode potential of the (n-1)-th charging stage is:

$$V_{allowable\ lowest\ negative\ electrode\_n-1} + V_{rebound\_n} = V_{allowable\ lowest\ negative\ electrode\_n} +$$

$$V_{polarization\_n} \quad (\text{Equation 4})$$

where $V_{allowable\ lowest\ negative\ electrode\_n-1}$ is the lowest allowable negative electrode potential of the (n-1)-th charging stage, $V_{rebound\_n}$ is the rebound potential between the (n-1)-th charging stage and the n-th charging stage, $V_{allowable\ lowest\ negative\ electrode\_n}$ is the lowest allowable negative electrode potential of the n charging stage, and $V_{polarization\_n}$ is the polarization potential of the n-th charging stage.

According to the embodiment of the present disclosure, the parameters in the above four equations are described in detail below.

The rebound potential is caused by current reduction between two adjacent charging stages, and the characteristic of the rebound potential is inherent in the process of charging the battery cell. The fast charging methods known in the prior art all ignore the characteristic of the rebound potential, thereby failing to calculate the theoretical maximum charging capacity of the battery cell accurately.

The polarization potential is an electrode potential of an electrode that is electrified, resulted from a change of the electrode potential due to the current passing through the electrode, and classified into a positive electrode polarization potential and a negative electrode polarization potential. Both the positive electrode polarization and the negative electrode polarization can reduce the electrode potential difference, which may result in a corrosion of a primary cell, thereby reducing the corrosion current and hindering the progress of the corrosion.

The allowable lowest negative electrode potential of the n-th charging stage, $V_{allowable\ lowest\ negative\ electrode\_n}$, is the allowable lowest negative electrode potential determined for the n-th charging stage to ensure that the negative electrode potential of the battery cell is not lower than 0V in the whole life cycle, prevent lithium precipitation at the negative electrode interface, and fully utilize the fast charging capability of the battery cell. The specific value of $V_{allowable\ lowest\ negative\ electrode\_n}$, i.e., the specific value of the allowable lowest negative electrode potential of the n-th charging stage, is determined by comprehensively calculating the processing capability of the battery cell, the attenuation of the battery cell and other factors, where the specific value of $V_{allowable\ lowest\ negative\ electrode\_n}$ is greater than and approach 0.

The allowable lowest negative electrode potential of the (n-1)-th charging stage, $V_{allowable\ lowest\ negative\ electrode\_n-1}$, is the allowable lowest negative electrode potential determined for the (n-1)-th charging stage based on the allowable lowest negative electrode potential of the n-th charging stage, in order to ensure that the negative electrode potential of the battery cell is not lower than 0V in the whole life cycle, prevent lithium precipitation at the negative electrode interface, and fully exploit the fast charging capacity of the battery cell. The $V_{allowable\ lowest\ negative\ electrode\_n-1}$ can be obtained through calculations based on the allowable lowest negative electrode potential of the n-th charging stage $V_{allowable\ lowest\ negative\ electrode\_n}$.

The charging current of the n-th charging stage, $I_n$: the maximum charging current of the last stage in the charging process can be experimentally measured, that is, the fast charging current limit of the n-th charging stage $I_n$ can be obtained directly by testing because the n-th charging stage is the last stage in the charging process, and there is no next charging stage. Therefore, there is no rebound potential caused by the current reduction between two adjacent stages, and $I_n$ is the exact fast charging current limit of the n-th charging stage.

The charging current of the (n-1)-th charging stage, $I_{n-1}$: since the rebound potential caused by the reduced current between two adjacent charging stages exits in the (n-1)-th to the 1-st charging stages, the fast charging current limits of the (n-1)-th to the 1-st charging stages $I_{n-1}$ to $I_1$ cannot be directly obtained by testing, and shall be derived through a joint calculation of the rebound potential equation, the polarization potential equation and the difference equation of the allowable lowest negative electrode potentials of the adjacent charging stages, i.e., calculation in combination with Equation 1 to Equation 4 as mentioned above.

The negative electrode equilibrium potential of the (n-1)-th charging stage, $V_{negative\ electrode\ equilibrium\_n-1}$: in a reversible electrode, if a metal becomes a cation to enter a solution and metal ions in the solution are deposited on a surface of the metal at the same speed, the reaction reaches dynamic equilibrium, that is, the material migrations take place at the same speed, and so does the charge transport, in the forward and reverse processes, at which time, the potential value on the electrode is called the equilibrium electrode potential, where the negative electrode equilibrium potentials of the (n-1)-th to the 2-nd charging stages, $V_{negative\ electrode\ equilibrium\_n-1}$ to $V_{negative\ electrode\ equilibrium\_2}$, are all values inherent in the negative electrode and can all be tested experimentally.

The ohmic impedance $R_{ohm\_n}$, the electrochemical impedance $R_{electrochem\_n}$, and the diffusion impedance $R_{diffusion\_n}$ of the n-th charging stage, and the ohmic impedance $R_{ohm\_n-1}$, the electrochemical impedance $R_{electrochem\_n-1}$, and the diffusion impedance $R_{diffusion\_n-1}$ of the (n-1)-th charging stage: the ohmic impedance, the electrochemical impedance and the diffusion impedance of each charging stage are derived from the electrochemical alternating current (AC) impedance test. According to the embodiment of the present disclosure, after an electrochemical AC impedance spectroscopy is obtained, the ohmic impedance, the electrochemical impedance, and the diffusion impedance can be calculated through fitting by using professional software such as ZView. Once the ohmic impedance, the electrochemical impedance and the diffusion impedance of each charging stage are obtained, the rebound potential caused by the current reduction between two adjacent charging stages can be calculated, so as to figure out the theoretical maximum charging capacity of the battery cell.

It should be noted that the Electrochemical Impedance Spectroscopy (EIS) applies an AC sinusoidal potential wave with small amplitudes of different frequencies to an electrochemical system, and measures a change in a ratio of an AC potential to a current signal (the impedance of the system) with a sinusoidal frequency w, or a change in a phase angle f of the impedance with the sinusoidal frequency w.

It should be noted that, parameters that can be directly tested experimentally include: the allowable lowest negative electrode potential of the n-th charging stage $V_{allowable\ lowest\ negative\ electrode\_n}$; the charging current of the n-th charging stage, $I_n$; the negative electrode equilibrium potential $V_{negative\ electrode\ equilibrium\_n-1}$ of the (n-1)-th charging stage; the ohmic impedance $R_{ohm\_n}$, the electrochemical impedance $R_{electrochem\_n}$, and $R_{diffusion\_n}$, the diffusion impedance of the n-th charging stage; and the ohmic impedance $R_{ohm\_n-1}$, the electrochemical impedance $R_{electrochem\_n-1}$, and the diffusion impedance $R_{diffusion\_n-1}$ of the (n-1)-th charging stage. That is to say, the above parameters can be obtained without further calculations.

In other words, the other parameters than the charging current value and the allowable lowest negative electrode potential value of each of the (n-1)-th to the 1-st charging stages can be directly tested experimentally.

For the certain charging stage, the parameters of the certain charging stage and the parameters of the adjacent charging stage prior to the certain charging stage serve as a basis for deriving the charging current value of the adjacent charging stage prior to the certain charging stage.

Regarding the n-th to the 2-nd charging stages:

(1) The n-th charging stage

It should be noted that, for the n-th charging stage, the certain charging stage is the n-th charging stage, and the adjacent charging stage prior to the certain charging stage is the (n-1)-th charging stage.

For the certain charging stage, the first charging current parameter is $I_n$, the first allowable lowest negative electrode potential parameter is $V_{allowable\ lowest\ negative\ electrode\_n}$, and the first impedance parameters are $R_{ohm\_n}$, $R_{electrochem\_n}$, and $R_{diffusion\_n}$. For the adjacent charging stage prior to the certain charging stage, the second impedance parameters are $R_{ohm\_n-1}$, $R_{electrochem\_n-1}$, and $R_{diffusion\_n-1}$, the negative electrode equilibrium potential parameter is $V_{negative\ electrode\ equilibrium\_n-1}$, the polarization potential algebraic formula is $I_{n-1} \cdot (R_{ohm\_n-1} + R_{electrochem\_n-1} + R_{diffusion\_n-1})$, and the current reduction algebraic formula is $I_{n-1} - I_n$.

The rebound potential value ($V_{rebound\_n}$) of the certain charging stage is determined based on the first charging current parameter ($I_n$) and the first impedance parameters ($R_{ohm\_n}$, $R_{electrochem\_n}$, and $R_{diffusion\_n}$) of the certain charging stage, as well as the current reduction algebraic formula ($I_{n-1} - I_n$) of the adjacent charging stage prior to the certain charging stage.

The polar potential value ($V_{polarization\_n}$) of the certain charging stage is determined based on the first charging current parameter ($I_n$) and the first impedance parameters ($R_{ohm\_n}$, $R_{electrochem\_n}$, and $R_{diffusion\_n}$) of the certain charging stage.

The difference value between the allowable lowest negative electrode potential of the certain charging stage and the allowable lowest negative electrode potential of the adjacent charging stage prior to the certain charging stage, ($V_{allowable\ lowest\ negative\ electrode\_n-1} - V_{allowable\ lowest\ negative\ electrode\_n}$), is determined based on the negative electrode equilibrium potential parameter ($V_{negative\ electrode\ equilibrium\_n-1}$), the second impedance parameters ($R_{ohm\_n-1}$, $R_{electrochem\_n-1}$, and $R_{diffusion\_n-1}$), and the polarization potential algebra formula [$I_{n-1} \cdot (R_{ohm\_n-1} + R_{electrochem\_n-1} + R_{diffusion\_n-1})$] of the adjacent charging stage prior to the certain charging stage and the first allowable lowest negative electrode potential parameter ($V_{allowable\ lowest\ negative\ electrode\_n}$) of the certain charging stage.

It should be noted that $I_{n-1}$ is unknown at the n-th charging stage, and thus the polarization potential and the current reduction algebraic formula of the (n-1)-th charging stage are unknown and expressed algebraically.

(2) The (n-1)-th charging stage

It should be noted that, for the (n-1)-th charging stage, the certain charging stage is the (n-1)-th charging stage, and the adjacent charging stage prior to the certain charging stage is the (n-2)-th charging stage.

For this certain charging stage, the first charging current parameter is $I_{n-1}$, the first allowable lowest negative electrode potential parameter is $V_{allowable\ lowest\ negative\ electrode\_n-1}$, and the first impedance parameters are $R_{ohm\_n-1}$, $R_{electrochem\_n-1}$, and $R_{diffusion\_n-1}$. For the adjacent charging stage prior to this certain charging stage, the second impedance parameters are $R_{ohm\_n-2}$, $R_{electrochem\_n-2}$, and $R_{diffusion\_n-2}$, the negative electrode equilibrium potential parameter is $V_{negative\ electrode\ equilibrium\_n-2}$, the polarization potential algebraic formula is $I_{n-2} \cdot (R_{ohm\_n-2} + R_{electrochem\_n-2} + R_{diffusion\_n-2})$, and the current reduction algebraic formula is $I_{n-2} - I_{n-1}$.

The rebound potential value ($V_{rebound\_n-1}$) of the certain charging stage is determined based on the first charging current parameter ($I_{n-1}$) and the first impedance parameters ($R_{ohm\_n-1}$, $R_{electrochem\_n-1}$, and $R_{diffusion\_n-1}$) of the certain charging stage, and the current reduction algebraic formula ($I_{n-2} - I_{n-1}$) of the adjacent charging stage prior to the certain charging stage.

The polar potential value ($V_{polarization\_n-1}$) of the certain charging stage is determined based on the first charging current parameter ($I_{n-1}$) and the first impedance parameters ($R_{ohm\_n-1}$, $R_{electrochem\_n-1}$, and $R_{diffusion\_n-1}$) of the certain charging stage.

The difference value between the allowable lowest negative electrode potential of the certain charging stage and the allowable lowest negative electrode potential of the adjacent charging stage prior to the certain charging stage, ($V_{allowable\ lowest\ negative\ electrode\_n-2} - V_{allowable\ lowest\ negative\ electrode\_n-1}$), is determined based on the negative electrode equilibrium potential parameter ($V_{negative\ electrode\ equilibrium\_n-2}$), the second impedance parameters ($R_{ohm\_n-2}$, $R_{electrochem\_n-2}$, and $R_{diffusion\_n-2}$), and the polarization potential algebra formula [$I_{n-2} \cdot (R_{ohm\_n-2} + R_{electrochem\_n-2} + R_{diffusion\_n-2})$)] of the adjacent charging stage prior to the certain charging stage and the first allowable lowest negative electrode potential parameter ($V_{allowable\ lowest\ negative\ electrode\_n-1}$) of the certain charging stage.

It should be noted that $I_{n-2}$ is unknown at the (n-1)-th charging stage, and thus the polarization potential and the current reduction algebraic formula of the (n-2)-th charging stage are unknown and expressed algebraically.

(3) ... (The (n-2)-th to the 3-rd charging stages are omitted herein).

(4) The 2-nd charging stage

It should be noted that, for the 2-nd charging stage, the certain charging stage is the 2-nd charging stage, and the adjacent charging stage prior to the certain charging stage is the 1-st charging stage.

For the certain charging stage, the first charging current parameter is $I_2$, the first allowable lowest negative electrode potential parameter is $V_{allowable\ lowest\ negative\ electrode\_2}$, and the first impedance parameters are $R_{ohm\_2}$, $R_{electrochem\_2}$, and $R_{diffusion\_2}$. For the adjacent charging stage prior to the certain charging stage, the second impedance parameters are $R_{ohm\_1}$, $R_{electrochem\_1}$, and $R_{diffusion\_1}$, the negative electrode equilibrium potential parameter is $V_{negative\ electrode\ equilibrium\_1}$, the polarization potential algebraic formula is $I_1 \cdot (R_{ohm\_1} + R_{electrochem\_1} + R_{diffusion\_1})$, and the current reduction algebraic formula is $I_1 - I_2$.

The rebound potential value ($V_{rebound\_2}$) of the certain charging stage is determined based on the first charging current parameter ($I_2$) and the first impedance parameters ($R_{ohm\_2}$, $R_{electrochem\_2}$, and $R_{diffusion\_2}$) of the certain charging stage, and the current reduction algebraic formula ($I_1 - I_2$) of the adjacent charging stage prior to the certain charging stage.

The polar potential value ($V_{polarization\_2}$) of the certain charging stage is determined based on the first charging current parameter ($I_2$) and the first impedance parameters ($R_{ohm\_2}$, $R_{electrochem\_2}$, and $R_{diffusion\_2}$) of the certain charging stage.

The difference value between the allowable lowest negative electrode potential of the certain charging stage and the allowable lowest negative electrode potential of the adjacent charging stage prior to the certain charging stage, ($V_{allowable\ lowest\ negative\ electrode\_1} - V_{allowable\ lowest\ negative\ electrode\_2}$), is determined based on the negative electrode equilibrium potential parameter ($V_{negative\ electrode\ equilibrium\_1}$), the second impedance parameters ($R_{ohm\_1}$, $R_{electrochem\_1}$, and $R_{diffusion\_1}$), and the polarization potential algebra formula [$I_1 \cdot (R_{ohm\_1} + R_{electrochem\_1} + R_{diffusion\_1})$] of the adjacent charging stage prior to the certain charging stage and the first allowable lowest negative electrode potential parameter ($V_{allowable\ lowest\ negative\ electrode\_2}$) of the certain charging stage.

It should be noted that $I_1$ is unknown at the 2-nd charging stage, and thus the polarization potential and the current reduction algebraic formula of the 1-st charging stage are unknown and expressed algebraically.

In step 103: one or more charging current values of each charging stage are calculated based on the rebound potential value and the polarization potential value of the charging stage and the difference value between the allowable lowest negative electrode potentials of adjacent charging stages.

The charging current $I_n$ of the n-th charging stage can be obtained directly by testing experimentally, one

charging current $I_n$ can be obtained, and the charging currents $I_{n-1}$ to $I_1$ of the (n-1)-th to the 1-st charging stages are calculated based on the rebound potential value and the polarization potential value of each charging stage as well as the difference value between the allowable lowest negative electrode potentials of the adjacent charging stages. That is, the charging currents $I_{n-1}$ to $I_1$ of the (n-1)-th to the 1-st charging stages are calculated by combining Equations 1 to 4 as mentioned above, and the calculation of each charging stage may have more than one solutions, and accordingly, each charging current value may have one or more values.

In an alternative embodiment of the present disclosure, step 103 may include the following sub-steps of: calculating the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

In an order from the n-th charging stage to the 2-nd charging stage:

(1) The n-th charging stage:

It should be noted that, for the n-th charging stage, the certain charging stage is the n-th charging stage, and the adjacent charging stage prior to the certain charging stage is the (n-1)-th charging stage.

One or more charging current values $I_{n-1}$ of the adjacent charging stage prior to the certain charging stage can be calculated based on the rebound potential value $V_{rebound\_n}$ of the certain charging stage, the polarization potential value $V_{polarization\_n}$ of the certain charging stage, and the difference value $V_{allowable\ lowest\ negative\ electrode\_n-1} - V_{allowable\ lowest\ negative\ electrode\_n}$ between the allowable lowest negative electrode potentials of the certain charging stage and the adjacent charging stage prior to the certain charging stage.

(2) The (n-1)-th charging stage

It should be noted that, for the (n-1)-th charging stage, the certain charging stage is the (n-1)-th charging stage, and the adjacent charging stage prior to the certain charging stage is the (n-2)-th charging stage.

One or more charging current values $I_{n-2}$ of the adjacent charging stage prior to the certain charging stage can be calculated based on the rebound potential value of the certain charging stage $V_{rebound\_n-1}$, the polarization potential value $V_{polarization\_n-1}$ of the certain charging stage, and the difference value $V_{allowable\ lowest\ negative\ electrode\_n-2} - V_{allowable\ lowest\ negative\ electrode\_n-1}$ between the allowable lowest negative electrode potentials of the certain charging stage and the adjacent charging stage prior to the certain charging stage.

(3) ... (The (n-2)-th to the 3-rd charging stages are omitted herein).

(4) The 2-nd charging stage:

It should be noted that, for the 2-nd charging stage, the certain charging stage is the 2-nd charging stage, and the adjacent charging stage prior to the certain charging stage is the 1-st charging stage.

One or more charging current values $I_1$ of the adjacent charging stage prior to the certain charging stage can be calculated based on the rebound potential value $V_{rebound\_2}$ of the certain charging stage, the polarization potential value $V_{polarization\_2}$ of the certain charging stage, and the difference value $V_{allowable\ lowest\ negative\ electrode\_2} - V_{allowable\ lowest\ negative\ electrode\_1}$ between the allowable lowest negative electrode potentials of the certain charging stage and the adjacent charging stage prior to the certain charging stage.

In step 104, target fast charging current limits corresponding to different charging stages that satisfy a preset condition are determined based on the one or more charging current values of each of the n charging stages.

In the embodiment of the present disclosure, the charging current $I_n$ of the n-th charging stage can be obtained by testing, and one $I_n$ can be obtained; the charging currents $I_{n-1}$ to $I_1$ of the (n-1)-th to the 1-st charging stages can be obtained through calculations, and there are one or more values for each of $I_{n-1}$ to $I_1$. After the one or more charging current values of each charging stage in the n charging stages are obtained, the target fast charging current limits corresponding to different charging stages that satisfy the preset condition can be determined from the one or more charging current values of each charging stage in the n charging stages. In this way, the battery cell can be charged with the target fast charging current limits corresponding to the different charging stages, such that the fast charging capacity of the battery cell can be fully utilized, and the battery cell can be charged more efficiently.

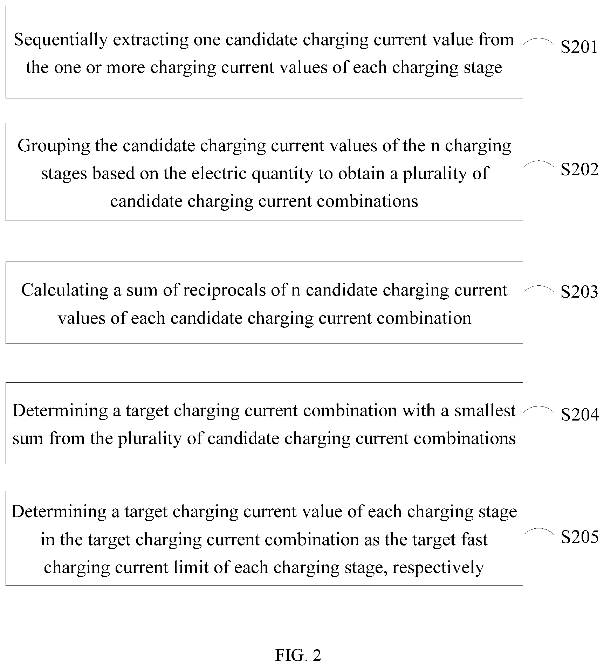

In an alternative embodiment of the present disclosure, referring to FIG. 2, which illustrates a flowchart of steps of determining target fast charging current limits that satisfy a preset condition of the n charging stages according to the present disclosure, step 104 may include sub-steps S201 to S205.

In step S201, one candidate charging current value is sequentially extracted from the one or more charging current values of each charging stage.

In the embodiment of the present disclosure, $I_n$ can be obtained by testing, and one $I_n$ can be obtained; the charging currents $I_{n-1}$ to $I_1$ of the (n-1)-th to the 1-st charging stages need to be calculated based on the rebound potential value, the polarization potential value and the difference value between the allowable lowest negative electrode potentials of the adjacent charging stages, and there may be one or more values for each of $I_{n-1}$ to $I_1$. If the charging current values of the (n-1)-th charging stage are $I_{(n-1)_1}$ and $I_{(n-1)_2}$, the charging currents of the (n-2)-th to the 2-nd charging stages are $I_{n-2}$ to $I_2$, the charging current values of the 1-st charging stage are $I_{(1)_1}$, $I_{(1)_2}$, and $I_{(1)_3}$, and one candidate charging current value is sequentially extracted from the one or more charging current values of each charging stage in the n-th to the 1-st charging stages, then the candidate charging current value of the n-th charging stage is $I_n$, the candidate charging current value of the (n-1)-th charging stage is $I_{(n-1)_1}$ or $I_{(n-1)_2}$, the candidate charging current values of the (n-2)-th to the 2-nd charging stages are $I_{n-2}$ to $I_2$, and the candidate charging current value of the 1-st charging stage is $I_{(1)_1}$, $I_{(1)_2}$ or $I_{(1)_3}$. The foregoing example is provided only to enable those skilled in the art to better understand the embodiment of the present disclosure and is not intended to limit the present disclosure.

In step S202, the candidate charging current values of the n charging stages are grouped based on the electric quantity to obtain a plurality of candidate charging current combinations.

In the embodiment of the present disclosure, the candidate charging current values of the n charging stages are grouped based on the charging electric quantity to obtain a plurality of candidate charging current combinations.

Further referring to the above example, after extracting the candidate charging current value of the n-th charging stage $I_n$, the candidate charging current value of the (n-1)-th charging stage $I_{(n-1)_1}$ or $I_{(n-1)_2}$, the candidate charging current values of the (n-2)-th to the 2-nd charging stages $I_{n-2}$ to $I_2$, and the candidate charging current value of the 1-st charging stage $I_{(1)_1}$, $I_{(1)_2}$ or $I_{(1)_3}$, the candidate charging current values of the n-th charging stage are grouped based on the electric quantity to obtain the plurality of candidate charging current combinations, i.e., a candidate charging current combination A ($I_{(1)_1}$, $I_2$,$\cdots$, $I_{(n-1)_1}$, $I_n$), a candidate charging current combination B ($I_{(1)_1}$, $I_2$,$\cdots$, $I_{(n-1)_2}$, $I_n$), a candidate charging current combination C ($I_{(1)_2}$, $I_2$,$\cdots$, $I_{(n-1)_1}$, $I_n$), a candidate charging current combination D ($I_{(1)_2}$, $I_2$,$\cdots$, $I_{(n-1)_2}$, $I_n$), a candidate charging current combination E ($I_{(1)_3}$, $I_2$,$\cdots$, $I_{(n-1)_1}$, $I_n$), and a candidate charging current combination F ($I_{(1)_3}$, $I_2$,$\cdots$, $I_{(n-1)_2}$, $I_n$). The foregoing example is provided only to enable those skilled in the art to better understand the embodiment of the present disclosure and is not intended to limit the present disclosure.

In step S203: a sum of reciprocals of n candidate charging current values of each candidate charging current combination is calculated.

In the embodiment of the present disclosure, after the plurality of candidate charging current combinations is obtained, the sum of the reciprocals of the n candidate charging current values of each candidate charging current combination is calculated.

Further referring to the above example, after obtaining the candidate charging current combination A ($I_{(1)_1}$, $I_2$, $\cdots$, $I_{(n-1)_1}$, $I_n$), the candidate charging current combination B ($I_{(1)_1}$, $I_2$,$\cdots$, $I_{(n-1)_2}$, $I_n$), the candidate charging current combination C ($I_{(1)_2}$, $I_2$,$\cdots$,$I_{(n-1)_1}$, $I_n$), the candidate charging current combination D ($I_{(1)_2}$, $I_2$,$\cdots$, $I_{(n-1)_2}$, $I_n$), the candidate charging current combination E ($I_{(1)_3}$, $I_2$,$\cdots$,$I_{(n-1)_1}$, $I_n$), and the candidate charging current combination F ($I_{(1)_3}$, $I_2$,$\cdots$, $I_{(n-1)_2}$, $I_n$), the sum of the reciprocals of n candidate charging current values of each of the candidate charging current combinations A to F is calculated, for example:

for the candidate charging current combination A $\left( \dfrac{1}{I_{(1)_1}} + \dfrac{1}{I_2} + \cdots + \dfrac{1}{I_{(n-1)_1}} + \dfrac{1}{I_n} \right)$,

for the candidate charging current combination B $\left( \dfrac{1}{I_{(1)_1}} + \dfrac{1}{I_2} + \cdots + \dfrac{1}{I_{(n-1)_2}} + \dfrac{1}{I_n} \right)$,

for the candidate charging current combination C $\left( \dfrac{1}{I_{(1)_2}} + \dfrac{1}{I_2} + \cdots + \dfrac{1}{I_{(n-1)_1}} + \dfrac{1}{I_n} \right)$,

for the candidate charging current combination D $\left( \dfrac{1}{I_{(1)_2}} + \dfrac{1}{I_2} + \cdots + \dfrac{1}{I_{(n-1)_2}} + \dfrac{1}{I_n} \right)$,

for the candidate charging current combination E $\left( \dfrac{1}{I_{(1)_3}} + \dfrac{1}{I_2} + \cdots + \dfrac{1}{I_{(n-1)_1}} + \dfrac{1}{I_n} \right)$,

for the candidate charging current combination F $\left( \dfrac{1}{I_{(1)_3}} + \dfrac{1}{I_2} + \cdots + \dfrac{1}{I_{(n-1)_2}} + \dfrac{1}{I_n} \right)$. The foregoing example is provided only to enable those skilled in the art to better understand the embodiments of the present disclosure and is not intended to limit the present disclosure.

In step S204, a target charging current combination with the smallest sum is determined from the plurality of candidate charging current combinations.

In the embodiment of the present disclosure, after calculating and obtaining the sum of the reciprocals of the n candidate charging current values of each candidate charging current combination, the target charging current combination with the smallest sum value can be determined from the plurality of candidate charging current combinations.

Further referring to the above example, assuming that the sum of the candidate charging current combination A is 0.5, the sum of the candidate charging current combination B is 0.3, the sum of each one of the candidate charging current combinations C to E is 0.8, and the sum of the candidate charging current combination F is 0.6, it is obvious that the sum of the candidate charging current combination B is the smallest, thus the candidate charging current combination B is determined to be the target charging current combination. The foregoing example is provided only to enable those skilled in the art to better understand the embodiments of the present disclosure and is not intended to limit the present disclosure.

In step S205, a target charging current value of each charging stage in the target charging current combination is determined as the target fast charging current limit of each charging stage, respectively.

In the embodiment of the present disclosure, the target charging current value of each charging stage in the target charging current combination corresponds to the maximum charging current value of the charging stage, and from the target charging current combination, the target charging current value of each charging stage is determined as the target fast charging current limit of the charging stage, so as to perform the fast charging in the 1-st to the n-th charging stages with the maximum charging current.

Further referring to the above example, if the candidate charging current combination B is determined as the target charging current combination, the target charging current value of each charging stage in the candidate charging current combination B is determined as the target fast charging current limit of each charging stage. In other words, in the candidate charging current combination B $(I_{(1)_1}, I_2, \cdots, I_{(n-1)_2}, I_n)$, $I_{(1)_2}$ is determined as the target fast charging current limit of the 1-st charging stage, $I_2$ to $I_{n-2}$ are respectively determined as the target fast charging current limits of the 2-nd to the (n-2)-th charging stages, $I_{(n-1)_2}$ is determined as the target fast charging current limit of the (n-1)-th charging stage, and $I_n$ is determined as the target fast charging current limit of the n-th charging stage, as such, the fast charging can be conducted in the 1-st to the n-th charging stages of the process of charging the cell in an order of $(I_{(1)_1}, I_2, \cdots, I_{(n-1)_2}, I_n)$.

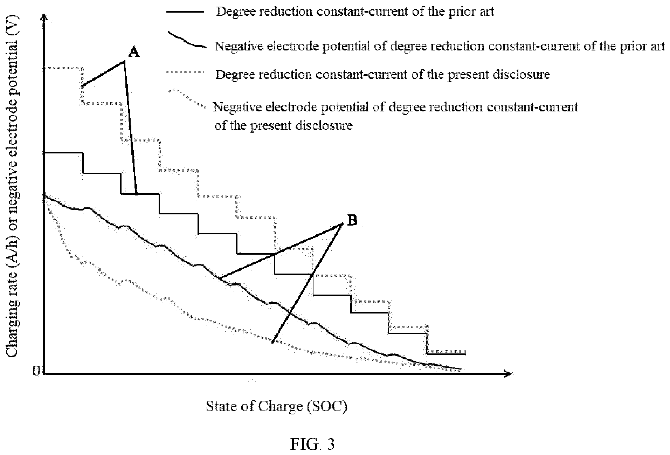

FIG. 3 is a graph showing a relationship between the fast charging current limit and a negative electrode potential according to the present disclosure and the prior art. Referring to FIG. 3, the two stepped lines marked as A represent the degree reduction constant-current curve of the present disclosure and the degree reduction constant-current curve of the prior art, respectively, where the dotted line represents the degree reduction constant-current curve of the present disclosure, and the solid line represents the degree reduction constant-current curve of the prior art; the abscissa of the stepped lines marked as A indicates SOC, and the ordinate thereof indicates charging rate. The two curves marked as B represent a curve of the negative electrode potential of degree reduction constant-current charging of the present disclosure and a curve of the negative electrode potential of degree reduction constant-current charging of the prior art, respectively, where the dotted line is the curve of the negative electrode potential of degree reduction constant-current charging of the present disclosure, and the solid line is the curve of the negative electrode potential of degree reduction constant-current charging of the prior art; the abscissa of the curves marked as B indicates SOC, and the ordinate thereof indicates negative electrode potential.

It should be noted that charging rate is a measure of a charging speed of a battery and refers to the amount of current required to charge a battery to its rated capacity in a specified period of time.

The two curves marked as B are both above 0V when the charging ends, which means that both the fast charging methods of the present disclosure and known in the prior art can prevent lithium precipitation at the negative electrode interface. On this premise, the two stepped lines marked as A tend to coincide when the charging ends. Viewing in the direction of SOC=0, in the same SOC, the charging rate of the present disclosure (i.e., the dotted line) is greater than the charging rate of the prior art (i.e., the solid line); with SOC approaching 0, the charging rate of the present disclosure is way greater than the charging rate of the prior art. That is, the present disclosure has higher efficiency and more sufficiently exploits the fast charging capacity of the battery cell than the prior art based on trials and errors.

In the embodiments of the present disclosure, firstly, the process of charging the battery cell is divided into the n charging stages based on the electric quantity; secondly, the rebound potential value and the polarization potential value of each charging stage and a difference value between allowable lowest negative electrode potentials of adjacent charging stages are determined in an order from larger to smaller values of n; thirdly, one or more charging current values of each charging stage are calculated based on the rebound potential value and the polarization potential value of the charging stage and the difference value between the allowable lowest negative electrode potentials of the adjacent charging stages; and finally, the target fast charging current limits of the n charging stages that satisfy a preset condition are determined based on the one or more charging current values of each charging stage of the n charging stages. According to the embodiments of the present disclosure, the characteristic of the rebound potential of the battery cell is fully exploited to calculate the fast charging capacity limit of the battery cell, which greatly saves samples and test resources and has the advantages of high efficiency, accuracy, and cost-effectiveness.

The embodiments of the present disclosure further provide an apparatus for determining a fast charging current limit of the battery cell, and the apparatus includes:

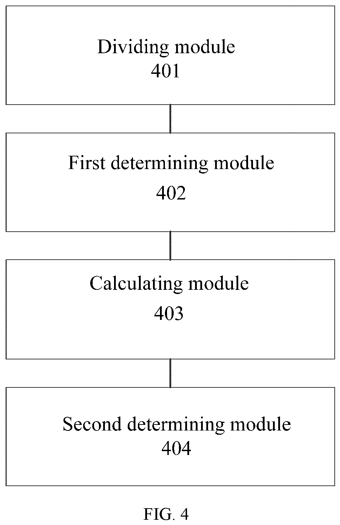

FIG. 4 is a structural block diagram of an apparatus for determining a fast charging current limit of a battery cell according to an embodiment of the present disclosure. Referring to FIG. 4, the apparatus specifically includes the following modules: a dividing module 401 configured to divide a process of charging the battery cell into n charging stages based on electric quantity; a first determining module 402 configured to determine a rebound potential value and a polarization potential value of each charging stage and a difference value between allowable lowest negative electrode potentials of adjacent charging stages in an order from larger to smaller values of n; a calculating module 403 configured to calculate one or more charging current values of each charging stage based on the rebound potential value and the polarization potential value of the charging stage and the difference value between the allowable lowest negative electrode potentials of adjacent charging stages; and a second determining module 404 configured to determine, based on one or more charging current values of each of the n charging stages, targeted fast charging current limits corresponding to different charging stages that satisfy a preset condition.

In an alternative embodiment of the present disclosure, the first determining module 402 may include: a parameter determining submodule configured to determine a first charging current parameter, a first allowable lowest negative electrode potential parameter and a first impedance parameter of a certain charging stage from an n-th charging stage to a 2-nd charging stage, respectively, and determine a second impedance parameter, a negative electrode equilibrium potential parameter, a polarization potential algebraic formula and a current reduction algebraic formula of an adjacent charging stage prior to the certain charging stage; a rebound potential value determining submodule configured to determine the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage; a polar potential value determining submodule configured to determine a polar potential value of the certain charging stage based on the first charging current parameter and the first impedance parameter of the certain charging stage one by one; and a submodule for determining a difference value between allowable lowest negative electrode potentials of adj acent charging stages, configured to determine the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

In an alternative embodiment of the present disclosure, the calculating module 403 may include: a charging current value calculating submodule configured to calculate the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

In an alternative embodiment of the present disclosure, the second determining module 404 may include: an extracting submodule configured to sequentially extract one candidate charging current value from the one or more charging current values of each charging stage; a grouping submodule configured to group the candidate charging current values of the n charging stages based on the electric quantity to obtain a plurality of candidate charging current combinations; a calculating submodule configured to calculate a sum of reciprocals of n candidate charging current values of each candidate charging current combination; a target charging current combination determining submodule configured to determine a target charging current combination with a smallest sum from the plurality of candidate charging current combinations; and a target fast charging current limit determining submodule configured to determine a target charging current value of each charging stage in the target charging current combination as the target fast charging current limit of each charging stage, respectively.

In an alternative embodiment of the present disclosure, the dividing module 401 may include: a charging submodule configured to charge the battery cell until a state of charge (SOC) of the battery cell reaches a saturated state; and a dividing submodule configured to divide, based on SOC, the process of charging the battery cell into the n charging stages in a manner of equal electric quantity.

In an alternative embodiment of the present disclosure, the first impedance parameter includes a first ohmic impedance parameter, a first electrochemical impedance parameter, and a first diffusion impedance parameter; and the second impedance parameter includes a second ohmic impedance parameter, a second electrochemical impedance parameter, and a second diffusion impedance parameter.

In an alternative embodiment of the present disclosure, the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

In the embodiments of the present disclosure, firstly, the process of charging the battery cell is divided into the n charging stages based on electric quantity; secondly, the rebound potential value and the polarization potential value of each charging stage and the difference value between allowable lowest negative electrode potentials of adjacent charging stages are determined in an order from larger to smaller values of n; thirdly, one or more charging current values of each charging stage are calculated based on the rebound potential value and the polarization potential value of the charging stage and the difference value between the allowable lowest negative electrode potentials of the adjacent charging stages; and finally, the target fast charging current limits of the n charging stages that satisfy a preset condition are determined based on the one or more charging current values of each of the n charging stages. According to the embodiments of the present disclosure, the characteristic of the rebound potential of the battery cell is fully exploited to calculate a fast charging capacity limit of the battery cell, which greatly saves samples and test resources and has the advantages of high efficiency, accuracy, and cost-effectiveness.

The embodiments involving the apparatus are substantially similar to the embodiments involving the method, and thus are described in a simpler manner, the similar may refer to the description of the embodiments involving the method.

The embodiments of the present disclosure further provide an electronic device, including a processor, a memory, and a computer program stored on the memory and executable on the processor. The computer program, when executed by the processor, performs the steps of the embodiments of the method for determining a fast charging current limit of a battery cell and achieves the same technical effects, which will not be repeated herein for brevity.

The embodiments of the present disclosure further provide a computer-readable storage medium, having a computer program stored thereon. The computer program, when executed by the processor, performs the steps of the embodiment of the method for determining a fast charging current limit of a battery cell and achieves the same technical effects, which will not be repeated herein for brevity.

The respective embodiments in this specification are described in a progressive manner, and each embodiment focuses on the differences from other embodiments, and the same or similar parts between the respective embodiments can be referred to each other.

Those skilled in the art should understand that the embodiments of the present disclosure may be provided as a method, an apparatus, or a computer program product. Accordingly, the embodiments of the present disclosure may adopt the form of an embodiment of complete hardware, an embodiment of complete software, or an embodiment combining software and hardware. In addition, the embodiments of the present disclosure may be in the form of computer program products implemented on one or more computer-usable storage media (including but not limited to disk storage, CD-ROM, optical storage, etc.) containing computer-usable program codes.

The embodiments of the present disclosure are described with reference to flowcharts and/or block diagrams of the methods, terminal devices (systems), and computer program products according to the embodiments of the present disclosure. It should be understood that each process and/or block in the flowchart and/or block diagram, and the combination of processes and/or blocks in the flowchart and/or block diagram can be realized by computer program instructions. These computer program instructions can be provided to the processors of general-purpose computers, special-purpose computers, embedded processors, or other programmable data processing terminal devices to produce a machine. Thus, the instructions executed by the processor of the computer or other programmable data processing terminal device produce means for exerting the functions specified in one or more processes in the flowchart and/or one or more blocks in the block diagram.

These computer program instructions may also be stored in a computer-readable memory that can guide a computer or other programmable data processing terminal device to work in a specific manner, so that the instructions stored in the computer-readable memory generate instructions are caused to generate an article of manufacture including an instruction device, which implements the functions specified in one or more processes in the flowchart and/or one or more blocks in the block diagram.

These computer program instructions may also be loaded on a computer or other programmable data processing terminal devices, so that a series of operation steps are executed on the computer or other programmable terminal devices to generate computer-implemented processing. Thus, the instructions executed on the computer or other programmable terminal devices provide steps for implementing functions specified in one or more processes in the flowchart and/or one or more blocks in the block diagram.

Although the preferred embodiments of the present disclosure have been described above, those skilled in the art can make additional changes and modifications to these embodiments once they learn the basic creative concept.

It should be noted that, in the present disclosure, relational terms such as "first" and "second" are merely used to distinguish one entity or operation from another entity or operation, and do not necessarily require or imply any actual relationship or order between these entities or operations. Moreover, the terms "comprise", "include", or any other variants thereof are intended to cover non-exclusive inclusion, and thus a process, method, article or terminal device including a series of elements includes the elements that are not explicitly listed in addition to these specified elements, or further include the elements inherent to this process, method, article, or terminal device. Without specific limitations, the element defined by the expression "including a..." does not exclude the existence of other identical elements in the process, method, article, or terminal device that includes said element.

The method for determining a fast charging current limit of a battery cell and the apparatus for determining a fast charging current limit of a battery cell according to the present disclosure are described in detail above. In the specification, the principle and implementation of the present disclosure are described by means of specific examples. The description of the above embodiments is merely intended to help understand the method and pivotal concept thereof.

**Claims**

1. A method for determining a fast charging current limit of a battery cell, the method comprising:

   dividing (101) a process of charging the battery cell into n charging stages based on electric quantity; **characterized in that**,
   the method further comprising:

   determining (102) a rebound potential value and a polarization potential value of each charging stage and a difference value between allowable lowest negative electrode potentials of adjacent charging stages in an order from larger to smaller values of n;
   calculating (103) one or more charging current values of each charging stage based on the rebound potential value and the polarization potential value of the charging stage and the difference value between the allowable lowest negative electrode potentials of adjacent charging stages; and
   determining (104) target fast charging current limits corresponding to different charging stages that satisfy a preset condition based on the one or more charging current values of each of the n charging stages.

2. The method according to claim 1, wherein said determining a rebound potential value and a polarization potential value of each charging stage and a difference value between allowable lowest negative electrode potentials of adjacent charging stages in an order from larger to smaller values of n comprises:

   determining a first charging current parameter, a first allowable lowest negative electrode potential parameter and a first impedance parameter of a certain charging stage from an n-th charging stage to a 2-nd charging stage, respectively, and determining a second impedance parameter, a negative electrode equilibrium potential parameter, a polarization potential algebraic formula and a current reduction algebraic formula of an adjacent charging stage prior to the certain charging stage;
   determining the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage;
   determining a polar potential value of the certain charging stage based on the first charging current parameter and the first impedance parameter of the certain charging stage one by one; and
   determining the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

3. The method according to claim 2, wherein said calculating one or more charging current values of each charging stage based on the rebound potential value and the polarization potential value of the charging stage and the difference value between the allowable lowest negative electrode potentials of adjacent charging stages comprises:
   calculating the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

4. The method according to claim 3, wherein said determining, based on the one or more charging current values of each of the n charging stages, target fast charging current limits corresponding to different charging stages that satisfy a preset condition comprises:

> sequentially extracting (S201) one candidate charging current value from the one or more charging current values of each charging stage;
> grouping (S202) the candidate charging current values of the n charging stages based on the electric quantity to obtain a plurality of candidate charging current combinations;
> calculating (S203) a sum of reciprocals of n candidate charging current values of each candidate charging current combination;
> determining (S204) a target charging current combination with a smallest sum from the plurality of candidate charging current combinations; and
> determining (S205) a target charging current value of each charging stage in the target charging current combination as the target fast charging current limit of each charging stage, respectively.

5. The method according to claim 1, wherein said dividing a process of charging the battery cell into n charging stages based on electric quantity comprises:

> charging the battery cell until a state of charge (SOC) of the battery cell reaches a saturated state; and
> dividing, based on SOC, the process of charging the battery cell into the n charging stages in a manner of equal electric quantity.

6. The method according to claim 2, wherein the first impedance parameter comprises a first ohmic impedance parameter, a first electrochemical impedance parameter, and a first diffusion impedance parameter; and the second impedance parameter comprises a second ohmic impedance parameter, a second electrochemical impedance parameter, and a second diffusion impedance parameter.

7. The method according to claim 2, wherein the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

8. An apparatus for determining a fast charging current limit of a battery cell, the apparatus comprising:

> a dividing module (401) configured to divide a process of charging the battery cell into n charging stages based on electric quantity; **characterized in that**,
> the apparatus further comprising:

>> a first determining module (402) configured to determine a rebound potential value and a polarization potential value of each charging stage and a difference value between allowable lowest negative electrode potentials of adjacent charging stages in an order from larger to smaller values of n;
>> a calculating module (403) configured to calculate one or more charging current values of each charging stage based on the rebound potential value and the polarization potential value of the charging stage and the difference value between the allowable lowest negative electrode potentials of adjacent charging stages; and
>> a second determining module (404) configured to determine, based on one or more charging current values of each of the n charging stages, targeted fast charging current limits corresponding to different charging stages that satisfy a preset condition.

9. The apparatus according to claim 8, wherein the first determining module comprises:

> a parameter determining submodule configured to determine a first charging current parameter, a first allowable lowest negative electrode potential parameter and a first impedance parameter of a certain charging stage from an n-th charging stage to a 2-nd charging stage, respectively, and determine a second impedance parameter, a negative electrode equilibrium potential parameter, a polarization potential algebraic formula and a current reduction algebraic formula of an adjacent charging stage prior to the certain charging stage;
> a rebound potential value determining submodule configured to determine the rebound potential value of the certain charging stage based on the first charging current parameter and the first impedance parameter of the certain charging stage and the current reduction algebraic formula of the adjacent charging stage prior to the certain charging stage one by one in an order from the n-th charging stage to the 2-nd charging stage;

a polar potential value determining submodule configured to determine a polar potential value of the certain charging stage based on the first charging current parameter and the first impedance parameter of the certain charging stage one by one; and

a submodule configured to determine the difference value between the allowable lowest negative electrode potentials of the current charging stage and the adjacent charging stage prior to the certain charging stage based on the negative electrode equilibrium potential parameter, the second impedance parameter, the polarization potential algebraic formula and the first allowable lowest negative electrode potential parameter of the certain charging stage one by one.

10. The apparatus according to claim 9, wherein the calculating module comprises a charging current value calculating submodule configured to calculate the one or more charging current values of the adjacent charging stage prior to the certain charging stage in the order from the n-th charging stage to the 2-nd charging stage based on the rebound potential value of the certain charging stage, the polarization potential value of the charging stage, and the difference value between the allowable lowest negative electrode potentials of the certain charging stage and the adjacent charging stage prior to the certain charging stage.

11. The apparatus according to claim 10, wherein the second determining module comprises:

an extracting submodule configured to sequentially extract one candidate charging current value from the one or more charging current values of each charging stage;

a grouping submodule configured to group the candidate charging current values of the n charging stages based on the electric quantity to obtain a plurality of candidate charging current combinations;

a calculating submodule configured to calculate a sum of reciprocals of n candidate charging current values of each candidate charging current combination;

a target charging current combination determining submodule configured to determine a target charging current combination with a smallest sum from the plurality of candidate charging current combinations; and

a target fast charging current limit determining submodule configured to determine a target charging current value of each charging stage in the target charging current combination as the target fast charging current limit of each charging stage, respectively.

12. The apparatus according to claim 8, wherein the dividing module comprises:

a charging submodule configured to charge the battery cell until a state of charge (SOC) of the battery cell reaches a saturated state; and

a dividing submodule configured to divide, based on SOC, the process of charging the battery cell into the n charging stages in a manner of equal electric quantity.

13. The apparatus according to claim 9, wherein the polarization potential algebraic formula is a product of a second charging current algebra of the adjacent charging stage prior to the certain charging stage and the second impedance parameter of the adjacent charging stage prior to the certain charging stage; and the current reduction algebraic formula is a difference between the second charging current algebra of the adjacent charging stage prior to the certain charging stage and the first charging current parameter of the certain charging stage.

14. An electronic device, comprising: a processor, a memory, and a computer program stored on the memory and executable on the processor, the computer program, when executed by the processor, implementing steps of the method for determining a fast charging current limit of a battery cell according to any one of claims 1 to 7.

15. A computer-readable storage medium, having a computer program stored thereon, wherein the computer program, when executed by a processor, implement steps of the method for determining a fast charging current limit of a battery cell according to any one of claims 1 to 7.

**Patentansprüche**

1. Verfahren zum Bestimmen einer Schnellladestromgrenze einer Batteriezelle, wobei das Verfahren Folgendes beinhaltet:

Unterteilen (101) eines Prozesses des Ladens der Batteriezelle in n Ladestufen auf der Basis einer elektrischen Größe; **dadurch gekennzeichnet, dass**
das Verfahren ferner Folgendes beinhaltet:

Bestimmen (102) eines Rückprallpotentialwertes und eines Polarisationspotentialwertes jeder Ladestufe und eines Differenzwertes zwischen zulässigen niedrigsten negativen Elektrodenpotentialen benachbarter Ladestufen in einer Reihenfolge von größeren zu kleineren Werten von n;
Berechnen (103) eines oder mehrerer Ladestromwerte jeder Ladestufe auf der Basis des Rückprallpotentialwertes und des Polarisationspotentialwertes der Ladestufe und des Differenzwertes zwischen den zulässigen niedrigsten negativen Elektrodenpotentialen benachbarter Ladestufen; und
Bestimmen (104) von Ziel-Schnellladestromgrenzen entsprechend verschiedenen Ladestufen, die eine vorgegebene Bedingung erfüllen, auf der Basis der ein oder mehreren Ladestromwerte jeder der n Ladestufen.

2. Verfahren nach Anspruch 1, wobei das genannte Bestimmen eines Rückprallpotentialwertes und eines Polarisationspotentialwertes jeder Ladestufe und eines Differenzwertes zwischen zulässigen niedrigsten negativen Elektrodenpotentialen benachbarter Ladestufen in einer Reihenfolge von größeren zu kleineren Werten von n Folgendes beinhaltet:

Bestimmen eines ersten Ladestromparameters, eines ersten zulässigen niedrigsten negativen Elektrodenpotentialparameters und eines ersten Impedanzparameters einer bestimmten Ladestufe jeweils von einer n-ten Ladestufe zu einer 2-ten Ladestufe, und Bestimmen eines zweiten Impedanzparameters, eines negativen Elektroden-Gleichgewichtspotential-Parameters, einer algebraischen Polarisationspotentialformel und einer algebraischen Stromreduktionsformel einer benachbarten Ladestufe vor der bestimmten Ladestufe;
Bestimmen des Rückprallpotentialwertes der bestimmten Ladestufe auf der Basis des ersten Ladestromparameters und des ersten Impedanzparameters der bestimmten Ladestufe und der algebraischen Stromreduktionsformel der benachbarten Ladestufe vor der bestimmten Ladestufe nacheinander in einer Reihenfolge von der n-ten Ladestufe zur 2-ten Ladestufe;
Bestimmen eines Polpotentialwertes der bestimmten Ladestufe auf der Basis des ersten Ladestromparameters und des ersten Impedanzparameters der bestimmten Ladestufe nacheinander; und
Bestimmen des Differenzwertes zwischen den zulässigen niedrigsten negativen Elektrodenpotentialen der aktuellen Ladestufe und der benachbarten Ladestufe vor der bestimmten Ladestufe auf der Basis des negativen Elektroden-Gleichgewichtspotential-Parameters, des zweiten Impedanzparameters, der algebraischen Polarisationspotentialformel und des ersten zulässigen niedrigsten negativen Elektrodenpotentialparameters der bestimmten Ladestufe nacheinander.

3. Verfahren nach Anspruch 2, wobei das genannte Berechnen eines oder mehrerer Ladestromwerte jeder Ladestufe auf der Basis des Rückprallpotentialwertes und des Polarisationspotentialwertes der Ladestufe und des Differenzwertes zwischen den zulässigen niedrigsten negativen Elektrodenpotentialen benachbarter Ladestufen Folgendes beinhaltet:
Berechnen der ein oder mehreren Ladestromwerte der benachbarten Ladestufe vor der bestimmten Ladestufe in der Reihenfolge von der n-ten Ladestufe zur 2-ten Ladestufe auf der Basis des Rückprallpotentialwertes der bestimmten Ladestufe, des Polarisationspotentialwertes der Ladestufe und des Differenzwertes zwischen den zulässigen niedrigsten negativen Elektrodenpotentialen der bestimmten Ladestufe und der benachbarten Ladestufe vor der bestimmten Ladestufe.

4. Verfahren nach Anspruch 3, wobei das genannte Bestimmen, auf der Basis der ein oder mehreren Ladestromwerte jeder der n Ladestufen, von Ziel-Schnellladestromgrenzen entsprechend verschiedenen Ladestufen, die eine vorgegebene Bedingung erfüllen, Folgendes beinhaltet:

sequentielles Extrahieren (S201) eines Kandidaten-Ladestromwertes aus den ein oder mehreren Ladestromwerten jeder Ladestufe;
Gruppieren (S202) der Kandidaten-Ladestromwerte der n Ladestufen auf der Basis der elektrischen Größe, um mehrere Kandidaten-Ladestromkombinationen zu erhalten;
Berechnen (S203) einer Summe von Kehrwerten von n Kandidaten-Ladestromwerten jeder Kandidaten-Ladestromkombination;
Bestimmen (S204) einer Ziel-Ladestromkombination mit einer kleinsten Summe aus den mehreren Kandidaten-Ladestromkombinationen; und

Bestimmen (S205) jeweils eines Ziel-Ladestromwertes jeder Ladestufe in der Ziel-Ladestromkombination als die Ziel-Schnellladestromgrenze jeder Ladestufe.

5. Verfahren nach Anspruch 1, wobei das genannte Unterteilen eines Prozesses des Ladens der Batteriezelle in n Ladestufen auf der Basis der elektrischen Größe Folgendes beinhaltet:

Laden der Batteriezelle, bis ein Ladezustand (SOC) der Batteriezelle einen gesättigten Zustand erreicht; und Unterteilen, auf der Basis des SOC, des Prozesses des Ladens der Batteriezelle in die n Ladestufen nach gleicher elektrischer Größe.

6. Verfahren nach Anspruch 2, wobei der erste Impedanzparameter einen ersten ohmschen Impedanzparameter, einen ersten elektrochemischen Impedanzparameter und einen ersten Diffusionsimpedanzparameter umfasst; und der zweite Impedanzparameter einen zweiten ohmschen Impedanzparameter, einen zweiten elektrochemischen Impedanzparameter und einen zweiten Diffusionsimpedanzparameter umfasst.

7. Verfahren nach Anspruch 2, wobei die algebraische Polarisationspotentialformel ein Produkt aus einer zweiten Ladestromalgebra der benachbarten Ladestufe vor der bestimmten Ladestufe und dem zweiten Impedanzparameter der benachbarten Ladestufe vor der bestimmten Ladestufe ist; und die algebraische Stromreduktionsformel eine Differenz zwischen der zweiten Ladestromalgebra der benachbarten Ladestufe vor der bestimmten Ladestufe und dem ersten Ladestromparameter der bestimmten Ladestufe ist.

8. Vorrichtung zum Bestimmen einer Schnellladestromgrenze einer Batteriezelle, wobei die Vorrichtung Folgendes umfasst:

ein Unterteilungsmodul (401), konfiguriert zum Unterteilen eines Prozesses des Ladens der Batteriezelle in n Ladestufen auf der Basis von elektrischer Größe; **dadurch gekennzeichnet, dass** die Vorrichtung ferner Folgendes umfasst:

ein erstes Bestimmungsmodul (402), konfiguriert zum Bestimmen eines Rückprallpotentialwertes und eines Polarisationspotentialwertes jeder Ladestufe und eines Differenzwertes zwischen zulässigen niedrigsten negativen Elektrodenpotentialen benachbarter Ladestufen in einer Reihenfolge von größeren zu kleineren Werten von n;
ein Berechnungsmodul (403), konfiguriert zum Berechnen eines oder mehrerer Ladestromwerte jeder Ladestufe auf der Basis des Rückprallpotenzialwertes und des Polarisationspotenzialwertes der Ladestufe und des Differenzwertes zwischen den zulässigen niedrigsten negativen Elektrodenpotenzialen benachbarter Ladestufen; und
ein zweites Bestimmungsmodul (404), konfiguriert zum Bestimmen, auf der Basis eines oder mehrerer Ladestromwerte jeder der n Ladestufen, von Ziel-Schnellladestromgrenzen entsprechend verschiedenen Ladestufen, die eine vorgegebene Bedingung erfüllen.

9. Vorrichtung nach Anspruch 8, wobei das erste Bestimmungsmodul Folgendes umfasst:

ein Parameter-Bestimmungssubmodul, konfiguriert zum Bestimmen jeweils eines ersten Ladestromparameters, eines ersten zulässigen niedrigsten negativen Elektrodenpotenzial-Parameters und eines ersten Impedanzparameters einer bestimmten Ladestufe von einer n-ten Ladestufe zu einer 2-ten Ladestufe, und zum Bestimmen eines zweiten Impedanzparameters, eines negativen Elektroden-Gleichgewichtspotenzial-Parameters, einer algebraischen Polarisationspotenzialformel und einer algebraischen Stromreduktionsformel einer benachbarten Ladestufe vor der bestimmten Ladestufe;
ein Rückprallpotentialwert-Bestimmungssubmodul, konfiguriert zum Bestimmen des Rückprallpotentialwertes der bestimmten Ladestufe auf der Basis des ersten Ladestromparameters und des ersten Impedanzparameters der bestimmten Ladestufe und der algebraischen Stromreduktionsformel der benachbarten Ladestufe vor der bestimmten Ladestufe nacheinander in einer Reihenfolge von der n-ten Ladestufe zur 2-ten Ladestufe;
ein Polpotentialwert-Bestimmungssubmodul, konfiguriert zum Bestimmen eines Polpotentialwertes der bestimmten Ladestufe auf der Basis des ersten Ladestromparameters und des ersten Impedanzparameters der bestimmten Ladestufe nacheinander; und
ein Submodul, konfiguriert zum Bestimmen des Differenzwertes zwischen den zulässigen niedrigsten negativen Elektrodenpotenzialen der aktuellen Ladestufe und der benachbarten Ladestufe vor der bestimmten Ladestufe auf der Basis des negativen Elektroden-Gleichgewichtspotential-Parameters, des zweiten Impedanzparameters, der algebraischen Polarisationspotentialformel und des ersten zulässigen niedrigsten negativen Elektrodenpotentialparameters der bestimmten Ladestufe nacheinander.

10. Vorrichtung nach Anspruch 9, wobei das Berechnungsmodul ein Ladestromwert-Berechnungssubmodul umfasst, konfiguriert zum Berechnen der ein oder mehreren Ladestromwerte der benachbarten Ladestufe vor der bestimmten Ladestufe in der Reihenfolge von der n-ten Ladestufe zur 2-ten Ladestufe auf der Basis des Rückprallpotentialwertes der bestimmten Ladestufe, des Polarisationspotentialwertes der Ladestufe und des Differenzwertes zwischen den zulässigen niedrigsten negativen Elektrodenpotentialen der bestimmten Ladestufe und der benachbarten Ladestufe vor der bestimmten Ladestufe.

11. Vorrichtung nach Anspruch 10, wobei das zweite Bestimmungsmodul Folgendes umfasst:

ein Extraktionssubmodul, konfiguriert zum sequentiellen Extrahieren eines Kandidaten-Ladestromwertes aus den ein oder mehreren Ladestromwerten jeder Ladestufe;
ein Gruppierungssubmodul, konfiguriert zum Gruppieren der Kandidaten-Ladestromwerte der n Ladestufen auf der Basis der elektrischen Größe, um mehrere Kandidaten-Ladestromkombinationen zu erhalten;
ein Berechnungssubmodul, konfiguriert zum Berechnen einer Summe von Kehrwerten von n Kandidaten-Ladestromwerten jeder Kandidaten-Ladestromkombination;
ein Ziel-Ladestromkombination-Bestimmungssubmodul, konfiguriert zum Bestimmen einer Ziel-Ladestromkombination mit einer kleinsten Summe aus den mehreren Kandidaten-Ladestromkombinationen; und
ein Ziel-Schnellladestromgrenzen-Bestimmungssubmodul, konfiguriert zum jeweiligen Bestimmen eines Ziel-Ladestromwertes jeder Ladestufe in der Ziel-Ladestromkombination als die Ziel-Schnellladestromgrenze jeder Ladestufe.

12. Vorrichtung nach Anspruch 8, wobei das Unterteilungsmodul Folgendes umfasst:

ein Ladesubmodul, konfiguriert zum Laden der Batteriezelle ist, bis ein Ladezustand (SOC) der Batteriezelle einen gesättigten Zustand erreicht; und
ein Unterteilungssubmodul, konfiguriert zum Unterteilen, auf der Basis des SOC, des Prozesses des Ladens der Batteriezelle in die n Ladestufen nach gleicher elektrischer Größe.

13. Vorrichtung nach Anspruch 9, wobei die algebraische Polarisationspotentialformel ein Produkt aus einer zweiten Ladestromalgebra der benachbarten Ladestufe vor der bestimmten Ladestufe und dem zweiten Impedanzparameter der benachbarten Ladestufe vor der bestimmten Ladestufe ist; und die algebraische Stromreduktionsformel eine Differenz zwischen der zweiten Ladestromalgebra der benachbarten Ladestufe vor der bestimmten Ladestufe und dem ersten Ladestromparameter der bestimmten Ladestufe ist.

14. Elektronisches Gerät, das Folgendes umfasst: einen Prozessor, einen Speicher und ein Computerprogramm, das auf dem Speicher gespeichert ist und von dem Prozessor ausgeführt werden kann, wobei das Computerprogramm bei Ausführung durch den Prozessor Schritte des Verfahrens zum Bestimmen einer Schnellladestromgrenze einer Batteriezelle nach einem der Ansprüche 1 bis 7 implementiert.

15. Computerlesbares Speichermedium mit einem darauf gespeicherten Computerprogramm, wobei das Computerprogramm bei Ausführung durch einen Prozessor Schritte des Verfahrens zum Bestimmen einer Schnellladestromgrenze einer Batteriezelle nach einem der Ansprüche 1 bis 7 implementiert.

**Revendications**

1. Procédé de détermination d'une limite de courant de charge rapide d'une cellule de batterie, le procédé comprenant :

une division (101) d'un processus de charge de la cellule de batterie en n étapes de charge sur la base d'une quantité électrique ; **caractérisé en ce que**
le procédé comprend en outre :

une détermination (102) d'une valeur de potentiel de rebond et une valeur de potentiel de polarisation de chaque étape de charge et une valeur de différence entre des potentiels d'électrodes négatives les plus faibles attribuables d'étapes de charge adjacentes dans un ordre décroissant de valeurs de n ;

un calcul (103) d'une ou de plusieurs valeurs de courant de charge de chaque étape de charge sur la base de la valeur de potentiel de rebond et de la valeur de potentiel de polarisation de l'étape de charge et de la valeur de différence entre les potentiels d'électrodes négatives les plus faibles attribuables d'étapes de charge adjacentes ; et

une détermination (104) de limites de courant de charge rapide cibles correspondant à différentes étapes de charge qui répondent à une condition prédéfinie sur la base des une ou plusieurs valeurs de courant de charge de chacune des n étapes de charge.

2. Procédé selon la revendication 1, dans lequel ladite détermination d'une valeur de potentiel de rebond et d'une valeur de potentiel de polarisation de chaque étape de charge et d'une valeur de différence entre des potentiels d'électrodes négatives les plus faibles attribuables d'étapes de charge adjacentes dans un ordre décroissant de valeurs de n comprend :

une détermination d'un premier paramètre de courant de charge, d'un premier paramètre de potentiel d'électrode négative le plus faible attribuable et d'un premier paramètre d'impédance d'une certaine étape de charge à partir d'une nième étape de charge jusqu'à une deuxième étape de charge, respectivement, et une détermination d'un second paramètre d'impédance, d'un paramètre de potentiel d'équilibre d'électrode négative, d'une formule algébrique de potentiel de polarisation et d'une formule algébrique de réduction de courant d'une étape de charge adjacente avant la certaine étape de charge ;

une détermination de la valeur de potentiel de rebond de la certaine étape de charge sur la base du premier paramètre de courant de charge et du premier paramètre d'impédance de la certaine étape de charge et de la formule algébrique de réduction de courant de l'étape de charge adjacente avant la certaine étape de charge un par un dans un ordre à partir de la nième étape de charge jusqu'à la deuxième étape de charge ;

une détermination d'une valeur de potentiel polaire de la certaine étape de charge sur la base du premier paramètre de courant de charge et du premier paramètre d'impédance de la certaine étape de charge un par un ; et

une détermination de la valeur de différence entre les potentiels d'électrodes négatives les plus faibles attribuables de l'étape de charge actuelle et de l'étape de charge adjacente avant la certaine étape de charge sur la base du paramètre de potentiel d'équilibre d'électrode négative, du second paramètre d'impédance, de la formule algébrique de potentiel de polarisation et du premier paramètre de potentiel d'électrode négative le plus faible attribuable de la certaine étape de charge un par un.

3. Procédé selon la revendication 2, dans lequel ledit calcul d'une ou de plusieurs valeurs de courant de charge de chaque étape de charge sur la base de la valeur de potentiel de rebond et de la valeur de potentiel de polarisation de l'étape de charge et de la valeur de différence entre les potentiels d'électrodes négatives les plus faibles attribuables d'étapes de charge adjacentes comprend :

un calcul des une ou plusieurs valeurs de courant de charge de l'étape de charge adjacente avant la certaine étape de charge dans l'ordre de la nième étape de charge à la deuxième étape de charge sur la base de la valeur de potentiel de rebond de la certaine étape de charge, de la valeur de potentiel de polarisation de l'étape de charge, et de la valeur de différence entre les potentiels d'électrodes négatives les plus faibles attribuables de la certaine étape de charge et de l'étape de charge adjacente avant la certaine étape de charge.

4. Procédé selon la revendication 3, dans lequel ladite détermination, sur la base des une ou plusieurs valeurs de courant de charge de chacune des n étapes de charge, de limites de courant de charge rapide cibles correspondant à différentes étapes de charge qui répondent à une condition prédéfinie comprend :

une extraction (S201) séquentielle d'une valeur de courant de charge candidate à partir des une ou plusieurs valeurs de courant de charge de chaque étape de charge ;

un regroupement (S202) des valeurs de courant de charge candidates des n étapes de charge sur la base de la quantité électrique pour obtenir une pluralité de combinaisons de courant de charge candidates ;

un calcul (S203) d'une somme des inverses de n valeurs de courant de charge candidates de chaque combinaison de courant de charge candidate ;

une détermination (S204) d'une combinaison de courant de charge cible avec une somme la plus petite à partir de la pluralité de combinaisons de courant de charge candidates ; et

une détermination (S205) d'une valeur de courant de charge cible de chaque étape de charge dans la combinaison de courant de charge cible à titre de limite de courant de charge rapide cible de chaque étape de charge, respectivement.

**5.** Procédé selon la revendication 1, dans lequel ladite division d'un processus de charge de la cellule de batterie en n étapes de charge sur la base d'une quantité électrique comprend :

une charge de la cellule de batterie jusqu'à ce qu'un état de charge (SOC) de la cellule de batterie atteigne un état saturé ; et
une division, sur la base du SOC, du processus de charge de la cellule de batterie en les n étapes de charge de manière à obtenir une quantité électrique égale.

**6.** Procédé selon la revendication 2, dans lequel le premier paramètre d'impédance comprend un premier paramètre d'impédance ohmique, un premier paramètre d'impédance électrochimique, et un premier paramètre d'impédance de diffusion ; et le second paramètre d'impédance comprend un second paramètre d'impédance ohmique, un second paramètre d'impédance électrochimique, et un second paramètre d'impédance de diffusion.

**7.** Procédé selon la revendication 2, dans lequel la formule algébrique de potentiel de polarisation es le produit d'un second calcul algébrique de courant de charge de l'étape de charge adjacente avant la certaine étape de charge et du second paramètre d'impédance de l'étape de charge adjacente avant la certaine étape de charge ; et la formule algébrique de réduction de courant est une différence entre le second calcul algébrique de courant de charge de l'étape de charge adjacente avant la certaine étape de charge et le premier paramètre de courant de charge de la certaine étape de charge.

**8.** Appareil de détermination d'une limite de courant de charge rapide d'une cellule de batterie, l'appareil comprenant :

un module de division (401) configuré pour diviser un processus de charge de la cellule de batterie en n étapes de charge sur la base d'une quantité électrique ; **caractérisé en ce que**
l'appareil comprend en outre :

un premier module de détermination (402) configuré pour déterminer une valeur de potentiel de rebond et une valeur de potentiel de polarisation de chaque étape de charge et une valeur de différence entre des potentiels d'électrodes négatives les plus faibles attribuables d'étapes de charge adjacentes dans un ordre décroissant des valeurs de n ;
un module de calcul (403) configuré pour calculer une ou plusieurs valeurs de courant de charge de chaque étape de charge sur la base de la valeur de potentiel de rebond et de la valeur de potentiel de polarisation de l'étape de charge et de la valeur de différence entre les potentiels d'électrodes négatives les plus faibles attribuables d'étapes de charge adjacentes ; et
un second module de détermination (404) configuré pour déterminer, sur la base d'une ou de plusieurs valeurs de courant de charge de chacune des n étapes de charge, des limites de courant de charge rapide cibles correspondant à différentes étapes de charge qui répondent à une condition prédéfinie.

**9.** Appareil selon la revendication 8, dans lequel le premier module de détermination comprend :

un sous-module de détermination de paramètres configuré pour déterminer un premier paramètre de courant de charge, un premier paramètre de potentiel d'électrode négative le plus faible attribuable et un premier paramètre d'impédance d'une certaine étape de charge à partir d'une nième étape de charge jusqu'à une deuxième étape de charge, respectivement, et déterminer un second paramètre d'impédance, un paramètre de potentiel d'équilibre d'électrode négative, une formule algébrique de potentiel de polarisation et une formule algébrique de réduction de courant d'une étape de charge adjacente avant la certaine étape de charge ;
un sous-module de détermination de valeur de potentiel de rebond configuré pour déterminer la valeur de potentiel de rebond de la certaine étape de charge sur la base du premier paramètre de courant de charge et du premier paramètre d'impédance de la certaine étape de charge et de la formule algébrique de réduction de courant de l'étape de charge adjacente avant la certaine étape de charge un par un dans un ordre à partir de la nième étape de charge jusqu'à la deuxième étape de charge ;
un sous-module de détermination de valeur de potentiel polaire configuré pour déterminer une valeur de potentiel polaire de la certaine étape de charge sur la base du premier paramètre de courant de charge et du premier paramètre d'impédance de la certaine étape de charge un par un ; et
un sous-module configuré pour déterminer la valeur de différence entre les potentiels d'électrodes négatives les plus faibles attribuables de l'étape de charge actuelle et de l'étape de charge adjacente avant la certaine étape de charge sur la base du paramètre de potentiel d'équilibre d'électrode négative, du second paramètre d'impédance, de la formule algébrique de potentiel de polarisation et du premier paramètre de potentiel d'électrode négative le plus faible attribuable de la certaine étape de charge un par un.

10. Appareil selon la revendication 9, dans lequel le module de calcul comprend un sous-module de calcul de valeur de courant de charge configuré pour calculer les une ou plusieurs valeurs de courant de charge de l'étape de charge adjacente avant la certaine étape de charge dans l'ordre de la nième étape de charge à la deuxième étape de charge sur la base de la valeur de potentiel de rebond de la certaine étape de charge, de la valeur de potentiel de polarisation de l'étape de charge, et de la valeur de différence entre les potentiels d'électrodes négatives les plus faibles attribuables de la certaine étape de charge et de l'étape de charge adjacente avant la certaine étape de charge.

11. Appareil selon la revendication 10, dans lequel le second module de détermination comprend :

un sous-module d'extraction configuré pour extraire de manière séquentielle une valeur de courant de charge candidate à partir des une ou plusieurs valeurs de courant de charge de chaque étape de charge ;
un sous-module de regroupement configuré pour regrouper les valeurs de courant de charge candidates des n étapes de charge sur la base de la quantité électrique pour obtenir une pluralité de combinaisons de courant de charge candidates ;
un sous-module de calcul configuré pour calculer une somme d'inverses de n valeurs de courant de charge candidates de chaque combinaison de courant de charge candidate ;
un sous-module de détermination de combinaison de courant de charge cible configuré pour déterminer une combinaison de courant de charge cible avec une somme la plus petite à partir de la pluralité de combinaisons de courant de charge candidates ; et
un sous-module de détermination de limite de courant de charge rapide cible configuré pour déterminer une valeur de courant de charge cible de chaque étape de charge dans la combinaison de courant de charge cible à titre de limite de courant de charge rapide cible de chaque étape de charge, respectivement.

12. Appareil selon la revendication 8, dans lequel le module de division comprend :

un sous-module de charge configuré pour charger la cellule de batterie jusqu'à ce qu'un état de charge (SOC) de la cellule de batterie atteigne un état saturé ; et
un sous-module de division configuré pour diviser, sur la base du SOC, le processus de charge de la cellule de batterie en les n étapes de charge de manière à obtenir une quantité électrique égale.

13. Appareil selon la revendication 9, dans lequel la formule algébrique de potentiel de polarisation est un produit d'une second calcul algébrique de courant de charge de l'étape de charge adjacente avant la certaine étape de charge et du second paramètre d'impédance de l'étape de charge adjacente avant la certaine étape de charge ; et la formule algébrique de réduction de courant est une différence entre le second calcul algébrique de courant de charge de l'étape de charge adjacente avant la certaine étape de charge et le premier paramètre de courant de charge de la certaine étape de charge.

14. Dispositif électronique, comprenant : un processeur, une mémoire, et un programme informatique stocké sur la mémoire et exécutable sur le processeur, le programme informatique, lorsqu'exécuté par le processeur, mettant en oeuvre des étapes du procédé pour une détermination d'une limite de courant de charge rapide d'une cellule de batterie selon l'une quelconque des revendications 1 à 7.

15. Support de stockage lisible par ordinateur présentant un programme informatique stocké dessus, dans lequel le programme informatique, lorsqu'exécuté par le processeur, met en oeuvre des étapes du procédé pour une détermination d'une limite de courant de charge rapide d'une cellule de batterie selon l'une quelconque des revendications 1 à 7.

```
┌─────────────────────────────────────────────────────────┐
│  Dividing a process of charging the battery cell into n   │        101
│    charging stages based on electric quantity             │
└─────────────────────────────────────────────────────────┘

┌─────────────────────────────────────────────────────────┐
│  Determining a rebound potential value and a polarization │
│  potential value of each charging stage and a difference  │        102
│  value between allowable lowest negative electrode         │
│  potentials of adjacent charging stages in an order from  │
│  larger to smaller values of n                            │
└─────────────────────────────────────────────────────────┘

┌─────────────────────────────────────────────────────────┐
│  Calculating one or more charging current values of each  │
│  charging stage based on the rebound potential value and  │        103
│  the polarization potential value of the charging stage    │
│  and the difference value between the allowable lowest      │
│  negative electrode potentials of adjacent charging stages │
└─────────────────────────────────────────────────────────┘

┌─────────────────────────────────────────────────────────┐
│  Determining target fast charging current limits          │
│  corresponding to different charging stages that satisfy   │        104
│  a preset condition based on the one or more charging      │
│  current values of each of the n charging stages          │
└─────────────────────────────────────────────────────────┘
```

FIG. 1

Sequentially extracting one candidate charging current value from the one or more charging current values of each charging stage — S201

Grouping the candidate charging current values of the n charging stages based on the electric quantity to obtain a plurality of candidate charging current combinations — S202

Calculating a sum of reciprocals of n candidate charging current values of each candidate charging current combination — S203

Determining a target charging current combination with a smallest sum from the plurality of candidate charging current combinations — S204

Determining a target charging current value of each charging stage in the target charging current combination as the target fast charging current limit of each charging stage, respectively — S205

FIG. 2

EP 4 084 266 B1

FIG. 3

26

Dividing module
401

First determining module
402

Calculating module
403

Second determining module
404

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190202299 A1
- US 20200335993 A1

- CN 111525651 A